# EUROPÄISCHE PATENTSCHRIFT

(11) **EP 1 186 455 B1**
(45) Veröffentlichungstag und Bekanntmachung des Hinweises auf die Patenterteilung: **17.09.2003**
(21) Anmeldenummer: 01116422.5
(22) Anmeldetag: 06.07.2001
(51) Int. Cl.: B60J 7/12, B60J 7/14

(54) **Verstelllbares Fahrzeugdach mit verschwenkbarer Seitenscheibe**
Movable vehicle roof with tiltable side window
Toit déplaçable pour véhicule équipé d'une fenêtre latérale basculante

(30) Priorität: 10.08.2000 DE 10039853
(43) Veröffentlichungstag der Anmeldung: 13.03.2002
(73) Patentinhaber: CTS Fahrzeug-Dachsysteme GmbH, 21079 Hamburg (DE)
(72) Erfinder: Halbweiss, Thomas, 71672 Marbach (DE); Salz, Wolfram, 71665 Vaihingen/Enz (DE); Hasselgruber, Andreas, 71735 Eberdingen-Nussdorf (DE); Reiff, Lothar, 71706 Markgröningen (DE)
(74) Vertreter: Müller, Gottfried

(56) Entgegenhaltungen:
- US-A- 4 784 428
- US-A- 5 456 516
- US-A- 5 520 432

## Beschreibung

Die Erfindung bezieht sich auf ein verstellbares Fahrzeugdach mit verschwenkbarer Seitenscheibe nach dem Oberbegriff des Anspruches 1.

Aus der Druckschrift DE 43 20 468 C1 ist ein mittels einer Verstelleinrichtung zwischen einer Schließposition und einer Öffnungsposition verstellbares Fahrzeugdach mit einem oben liegenden Dachteil und einem im rückwärtigen Bereich liegenden Heckteil bekannt, wobei das Dachteil um eine Schwenkachse am Heckteil und das Heckteil um eine weitere Schwenkachse an der Fahrzeugkarosserie zu verschwenken ist. Die Bewegung des Fahrzeugdaches zwischen Öffnungs- und Schließposition erfolgt mittels einer Verstelleinrichtung, die sowohl das Heckteil als auch das Dachteil beaufschlagt. Auch die hinteren Seitenscheiben sind fest mit dem Fahrzeugdach verbunden und werden in Öffnungsposition des Fahrzeugdaches in einem Abladeraum versenkt. Bei der Überführung des Daches von Schließposition zu Öffnungsposition werden die kinematisch gekoppelten Seitenscheiben um eine Schwenkachse am Fahrzeugdach verschwenkt und in Richtung des Fahrzeuginnenraumes eingeklappt. Die Zwangsführung der Seitenscheiben erfolgt mittels einer Koppeleinrichtung, welche die Bewegung der Seitenscheiben an die Bewegung des Heckteiles koppelt. Die Koppeleinrichtung besteht aus einer Mehrzahl kinematisch verbundener Gestängeteile, über die die Schwenkbewegung des Heckteils in eine Schwenkbewegung der Seitenscheibe um eine zur Heckteil-Schwenkachse nicht-parallele weitere Schwenkachse umgesetzt wird.

Die Kopplung der Seitenscheiben-Schwenkbewegung an die Heckteil-Schwenkbewegung setzt eine aufwendige Konstruktion der Verstell- und der Koppeleinrichtung mit einer Mehrzahl von Gestängebauteilen voraus, die einen vergleichsweise großen Raumbedarf aufweist. Auf Grund der Mehrzahl hintereinander geschalteter, zusammen wirkender Bauteile besteht die Gefahr, dass wegen Eigenelastizitäten oder wegen Spiels zusätzliche, nicht steuerbare Bewegungsmöglichkeiten des Fahrzeugdaches entstehen, die zu unerwünschten Spannungen und Undichtigkeiten führen können.

Der Erfindung liegt das Problem zugrunde, ein verstellbares Fahrzeugdach mit einer verschwenkbaren Seitenscheibe der eingangs genannten Art zu schaffen, dessen Verstellkinematik sich durch eine hohe Präzision und einen geringen Platzbedarf auszeichnet.

Dieses Problem wird erfindungsgemäß mit den Merkmalen des Anspruches 1 gelöst. Vorteilhafte Weiterbildungen sind den Unteransprüchen zu entnehmen.

Das erfindungsgemäß ausgebildete Fahrzeugdach weist zur Überführung der Seitenscheibe zwischen Schließ- und Öffnungsposition ein Betätigungselement auf, dessen eines Ende mit Abstand zur Seitenscheiben-Schwenkachse mit der Seitenscheibe gekoppelt ist und das an seinem gegenüberliegenden Ende fest mit einem Bauteil der Verstelleinrichtung verbunden ist. In dieser Ausführung ist das Betätigungselement, welches die Zwangsbewegung der Seitenscheibe auslöst, ein integraler Bestandteil der Verstelleinrichtung und ist insbesondere unmittelbar an einem Bauteil der Verstelleinrichtung angebunden, so dass die kinematische Kopplung zur Ausübung der Schwenkbewegung der Seitenscheibe ausschließlich zwischen der Seitenscheibe und der Verstelleinrichtung des Fahrzeugdaches besteht. Es ist dagegen nicht erforderlich, die Verschwenkbewegung der Seitenscheibe an eine Verstellbewegung eines Dachteiles zu koppeln. Weil die die Schwenkbewegung der Seitenscheibe auslösenden Bauteile der Verstelleinrichtung zuzuordnen sind, kann die Seitenscheibenkinematik raumsparend ausgeführt werden.

Ein weiterer Vorteil liegt darin, dass die an der Seitenscheibenkinematik beteiligten Bauteile aufgrund ihrer Anbindung an die Verstelleinrichtung auch nur entsprechend geringe Distanzen überbrücken müssen, wodurch Probleme mit Eigenelastizitäten in den Gestängeteilen der Verstelleinrichtung vermieden werden können. Wegen der geringen Anzahl an Bauteilen für die Seitenscheibenkinematik ist auch die Gefahr unerwünschten Spiels reduziert.

Die Seitenscheibe weist ein Drehgelenk auf, über das die Seitenscheibe vorteilhaft an einem Hauptlenker der Verstelleinrichtung verschwenkbar gelagert ist, so dass die Seitenscheibe bei der Überführung zwischen Schließ- und Ablageposition gegenüber der Fahrzeugkarosserie eine Schwenkbewegung um zwei Achsen ausführt, nämlich sowohl um die Schwenkachse des Hauptlenkers als auch um die Schwenkachse des eigenen Drehgelenks. Diese räumliche Bewegung der Seitenscheibe erlaubt ein Einklappen der Seitenscheibe in Richtung des Fahrzeuginnenraums und zugleich ein Ablegen in den rückwärtigen Ablageraum.

Gemäß einer vorteilhaften Ausführung umfasst die Kinematik der Seitenscheibe einen Kulissenzylinder, welcher mit dem Drehgelenk der Seitenscheibe ein einteiliges Bauteil bildet und auf dessen Mantelfläche eine Kulissenbahn ausgebildet ist, in die das Betätigungselement, welche die Verschwenkung der Seitenscheibe auslöst, gleitend und formschlüssig eingreift. Über die Kulissenbahn kann der zeitliche Ablauf der Schwenkbewegung beeinflusst werden; es können beispielsweise Phasen mit unterschiedlich hoher Schwenkgeschwindigkeit beim Übergang von Schließ- in Ablageposition und umgekehrt vorgesehen sein, wodurch insbesondere Kollisionen der diversen beweglichen Bauteile des Fahrzeugdaches vermieden werden können.

In einer bevorzugten Weiterbildung ist die Kulissenbahn auf dem Kulissenzylinder spiralförmig ausgeführt und verläuft die Bewegung des Betätigungselements in der Kulissenbahn in Bezug auf die Seitenscheibe ausschließlich translatorisch. Die Schwenkbewegung der Seitenscheibe wird in diesem Fall durch die Spiralform der Kulisse hervorgerufen, wohingegen das den Kulissenzylinder beaufschlagende Betätigungselement lediglich eine konstruktiv einfach zu erzeugende, translatorische Bewegung ausführt.

In einer weiteren bevorzugten Ausführung ist das Betätigungselement ein Antriebslenker, der gelenkig an der Seitenscheibe, insbesondere an einem Drehlagerblech der Seitenscheibe, gekoppelt ist und an seinem der Seitenscheibe abgewandten Ende drehbar in einem Lager der Verstelleinrichtung gehalten ist. Der Antriebslenker besitzt vorteilhaft nur eine einzige Bewegungsmöglichkeit, nämlich die Drehbewegung um seine Drehachse am Lager in der Verstelleinrichtung, wobei die Drehachse des Antriebslenkers zweckmäßig nicht parallel zur Drehachse der Seitenscheibe und der Drehachse eines Hauptlenkers verläuft, an welchem die Seitenscheibe drehbar gelagert ist. Diese Ausführung ermöglicht eine kinematisch bestimmte Bewegung der Seitenscheibe, insbesondere eine räumliche Schwenkbewegung um insgesamt zwei Drehachsen gegenüber der Fahrzeugkarosserie.

Der Antriebslenker ist vorteilhaft über ein Kugelgelenk mit der Seitenscheibe verbunden, so dass bei Ausführung der Schwenkbewegung bei der Überführung zwischen Schließ- und Öffnungsposition die Längsachse des Antriebslenkers gegenüber der Ebene der Seitenscheibe eine sich ändernde Winkelposition einnehmen kann.

Ausführungsbeispiele der Erfindung sind in den Zeichnungen dargestellt und werden im Folgenden beschrieben. Es zeigen:
- Fig. 1a bis 1c: das ein oberes Dachteil und ein hinteres Deckteil umfassende Fahrzeugdach, dargestellt in Schließposition, in einer Zwischenposition und in Ablageposition,
- Fig. 2a, 2b: eine an das Fahrzeugdach angekoppelte Seitenscheibe einschließlich Verstelleinrichtung, gezeigt in Explosionsdarstellung und in Zusammenbauposition,
- Fig. 3: eine perspektivische Ansicht einer Seitenscheibe einschließlich Verstelleinrichtung in einer weiteren Ausführung.

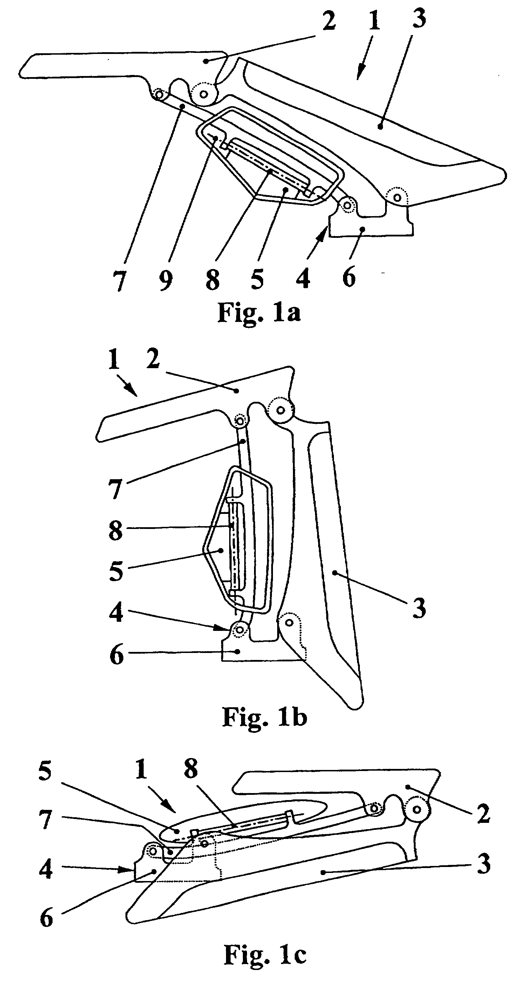

Das in Fig. 1a in Schließstellung dargestellte Fahrzeugdach 1 ist als Hardtop ausgeführt und umfasst ein oberes Dachteil 2 sowie ein heckseitiges Heckteil 3, die jeweils mittels einer kinematischen Verstelleinrichtung 4 zwischen der gezeigten Schließstellung über die in Fig. 1b dargestellte Zwischenstellung in die Ablageposition gemäß Fig. 1c zu verstellen sind, in der der Fahrzeuginnenraum offen ist und das Fahrzeugdach 1 in einem rückseitigen Ablageraum verstaut ist. Die Verstelleinrichtung 4 beaufschlagt sowohl das Dachteil 2 als auch das Heckteil 3. Die Verstelleinrichtung 4 umfasst ein Hauptlager 6, welches zweckmäßig karosseriefest angeordnet ist und an dem das Heckteil 3 schwenkbar gelagert ist, und einen schwenkbar gehaltenen Hauptlenker 7, dessen dem Hauptlager 6 abgewandtes Ende drehbar mit dem oberen Dachteil 2 verbunden ist. Das obere Dachteil 2 weist außerdem eine Drehachse zum hinteren Heckteil 3 auf, so dass mit dem Hauptlager 6, dem Hauptlenker 7, dem Dachteil 2 und dem Heckteil 3 ein kinematisches Viergelenk gebildet ist.

Am Hauptlenker 7, welcher in Fahrtrichtung des Fahrzeuges gesehen dem Heckteil 3 vorgelagert ist, ist ein Drehgelenk 8 drehbar gelagert, welches drehfest mit einer Seitenscheibe 5 verbunden ist und eine Drehbewegung der Seitenscheibe 5 gegenüber dem Hauptlenker 7 ermöglicht. Die Drehachse 9 des Drehgelenks 8 verläuft etwa parallel zur Längsachse des Hauptlenkers 7. Drehgelenk 8 und Seitenscheibe 5 sind fest miteinander verbunden.

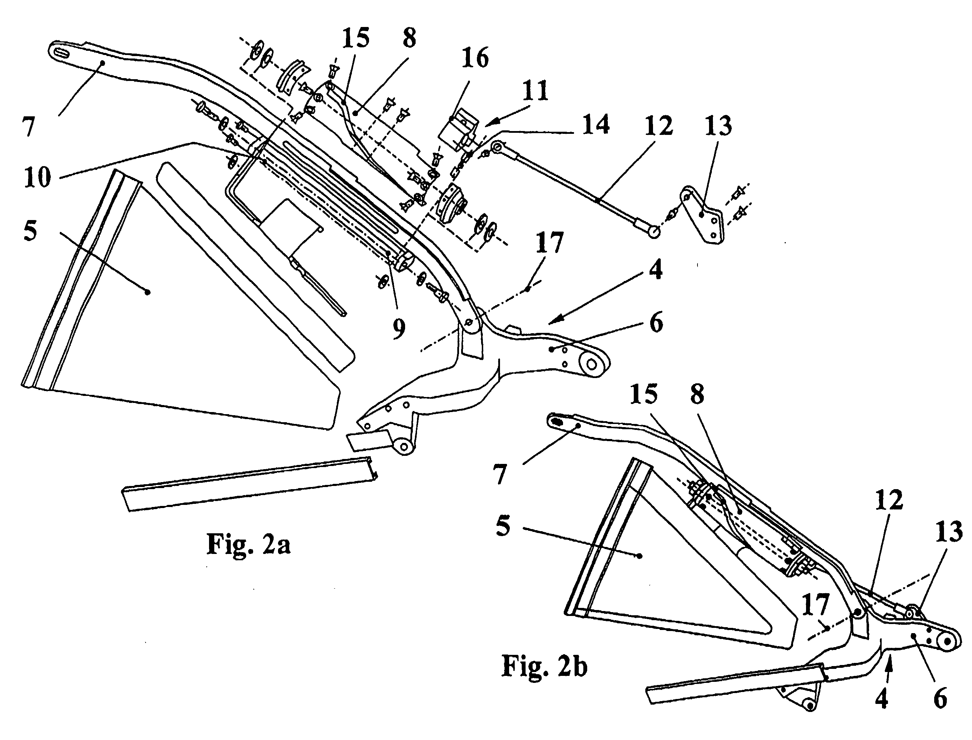

Wie den Fig. 2a und 2b zu entnehmen, ist an dem Hauptlenker 7 der Verstelleinrichtung 4 das Drehgelenk 8 der Seitenscheibe 5 drehbar um die Drehachse 9 gelagert, wobei zwischen zwei Haltegliedern des Hauptlenkers 7 ein Achsrohr 10 etwa parallel zur Längsachse des Hauptlenkers 7 vorgesehen ist, auf dem das Drehgelenk 8 schwenkbar, jedoch translatorisch unverrückbar aufsitzt. Das Drehgelenk 8 ist als Kulissenzylinder ausgeführt, dessen Mantelfläche eine Kulissenbahn 15 aufweist, welche über die Länge des Kulissenzylinders etwa spiralförmig gewunden ist.

Das Drehgelenk 8 wird von einem Betätigungselement 11 beaufschlagt und in eine Drehung um die Drehachse 9 gezwungen. Das Betätigungselement 11 umfasst einen Mitnehmer 16, welcher mit einem Kulissenbolzen 14 in Wirkverbindung mit der Kulissenbahn 15 auf dem Drehgelenk 8 steht. Der Mitnehmer 16 ist translatorisch verschiebbar am Hauptlenker 7 angeordnet und über eine Verbindungsstange 12 mit einem Halteblech 13 verbunden, welches gemäß Fig. 2b drehfest am Hauptlager 6 der Verstelleinrichtung 4 angeordnet ist.

Der Hauptlenker 7 ist schwenkbar am Hauptlager 6 gelagert, wobei die Drehachse 17 des Hauptlenkers 7 und die Drehachse 9 des Drehgelenks 8 der Seitenscheibe 5 nicht-parallel zueinander angeordnet sind und sich somit entweder schneiden oder kreuzen. Eine gleichzeitige Drehung sowohl des Hauptlenkers 7 als auch des Drehgelenks 8 hat daher eine räumliche Schwenkbewegung der Seitenscheibe 5 zur Folge. Bei Überführung des Fahrzeugdaches von Schließ- in Ablageposition wird hierbei die Seitenscheibe 5 sowohl nach innen in Richtung des Fahrzeuginnenraums eingeklappt als auch nach hinten in die Ablageposition verschwenkt. Beim Schließen des Fahrzeugdaches läuft der Vorgang entsprechend in umgekehrter Richtung ab.

Die Seitenscheibe ist in kinematisch bestimmter Weise an die Fahrzeugdachteile gekoppelt, so dass jeder Position des Fahrzeugdaches genau eine Position der Seitenscheibe zugeordnet werden kann. Die Bewegung der Seitenscheibe ist kinematisch zwangsgeführt und wird durch die ausschließlich translatorische Schiebebewegung des Kulissenbolzens 14 des Mitnehmers 16 in der Kulissenbahn 15 im Drehgelenk 8 der Seitenscheibe 5 hervorgerufen. Bei der Verschiebebewegung des Mitnehmers 16 wird der Kulissenbolzen 14 in der Kulissenbahn 15 entlang geführt. Da der Mitnehmer 16 sich lediglich translatorisch verschieben lässt und der Kulissenbolzen 14 zugleich formschlüssig in der spiralförmigen Kulissenbahn 15 gleitet, ist das Drehgelenk 8 auf Grund des radialen Abstandes der Kulissenbahn 15 zur Drehachse 9 und entsprechend der rotatorischen Komponente der Kulissenbahn 15 zu einer Drehbewegung um seine Drehachse 9 gezwungen, woraufhin auch die Seitenscheibe 5 eine Schwenkbewegung ausführt. Die Geschwindigkeit der Schwenkbewegung kann hierbei durch die Spiralform der Kulissenbahn 15 beeinflusst werden, wobei über den gesamten Öffnungs- bzw. Schließvorgang gesehen Phasen mit unterschiedlicher Rotationsgeschwindigkeit des Seitenfensters vorgesehen sein können.

Bei der Überführungsbewegung des Fahrzeugdaches zwischen Schließ- und Öffnungsposition wird der Hauptlenker 7 um seine Drehachse 17 verschwenkt, worauf hin die Dachteile des Fahrzeugdaches in ihre jeweilige gewünschte Position überführt werden. Da zudem - wie Fig. 2b zu entnehmen, die Drehachse 17 des Hauptlenkers 7 auf Abstand zum Anbindungspunkt des Halteblechs 13 der Verbindungsstange 12 für den Mitnehmer 16 liegt, bewirkt eine Schwenkbewegung des Hauptlenkers 7 um seine Drehachse 17 zwangsläufig eine translatorische Relativverschiebung des Mitnehmers 16 gegenüber dem Hauptlenker 7. Diese Relativverschiebung wird als auslösende Bewegung für die Verschwenkung der Seitenscheibe genutzt.

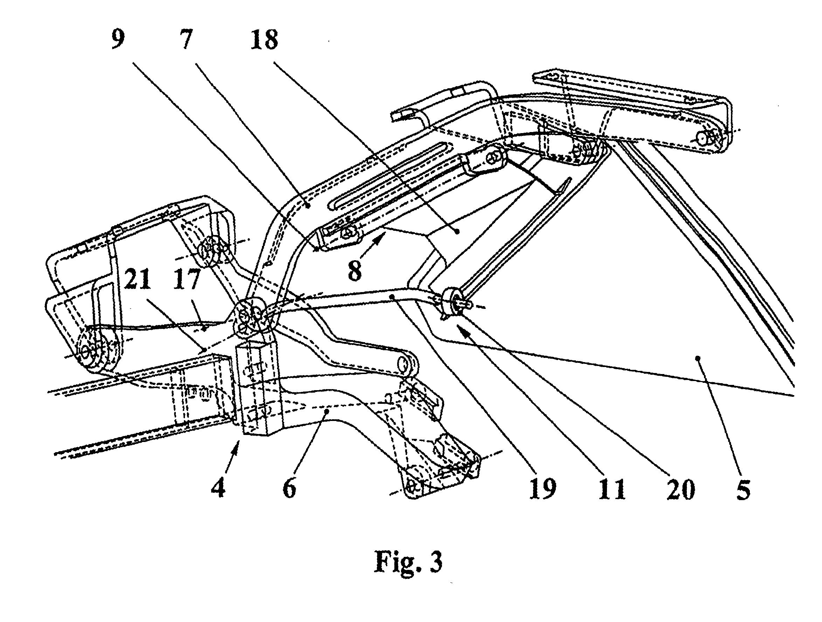

Im Ausführungsbeispiel gemäß Fig. 3 ist das Betätigungselement 11, welches die Seitenscheibe 5 beaufschlagt, als Antriebslenker 19 ausgeführt, welcher über ein Kugelgelenk 20 schwenkbar mit einem Drehlagerblech 18 der Seitenscheibe 5 verbunden ist, in das das Drehgelenk 8 integriert ist und das fest mit der Seitenscheibe 5 verbunden ist. Die Anlenkung des Antriebslenkers 19 am Drehlagerblech 18 der Seitenscheibe 5 liegt auf Abstand zur Drehachse 9 des Drehlagerblechs 18, um ein die Seitenscheibe 5 um ihre Drehachse 9 verschwenkendes Drehmoment aufbringen zu können. Der Antriebslenker 19 ist auf seiner der Seitenscheibe 5 abgewandten Seite drehbar am Hauptlager 6 gelagert. Die Drehachsen 17 des Hauptlenkers 7 und 21 des Antriebslenkers 19, welche beide ortsfest im Hauptlager 6 verlaufen, liegen nicht-parallel zueinander; die Achsen 17 und 21 schneiden sich oder kreuzen sich. Aufgrund der nicht-parallelen Lage der Drehachsen 17 und 21 führt auch die Seitenscheibe 5 bei einer Drehbeaufschlagung des Hauptlenkers 7 eine Schwenkbewegung um ihre Drehachse 9 aus, da die Seitenscheibe 5 über den Antriebslenker 19 an die Drehbewegung des Hauptlenkers 7 kinematisch zwangsgekoppelt ist.

Das Kugelgelenk 20 des Antriebslenkers 19 am Drehlagerblech 18 der Seitenscheibe 5 ermöglicht vorteilhaft eine geringfügige translatorische Verschiebung des Antriebslenkers 19 durch einen Ring des Kugelgelenks 20, wodurch Maß- und Fertigungsungenauigkeiten der Verstelleinrichtung 4 kompensiert werden können.

Es kann gegebenenfalls zweckmäßig sein, auch das Hauptlager 6 gegenüber der Fahrzeugkarosserie verschwenkbar auszuführen.

Anstelle einer oder zusätzlich zur Seitenscheibe kann auch ein sonstiges Seitenteil des Fahrzeugdaches, beispielsweise eine Seitenblende, in der vorbeschriebenen Weise kinematisch verstellt werden.

## Patentansprüche

1. Zwischen einer Schließposition und einer Öffnungsposition verstellbares Fahrzeugdach, mit einer das Fahrzeugdach (1) beaufschlagenden Verstelleinrichtung (4) und mit zumindest einer Seitenscheibe (5), die über ein Drehgelenk (8) verschwenkbar mit dem Fahrzeugdach (1) verbunden ist und während der Überführung zwischen Schließ- und Öffnungsposition mittels eines Betätigungselements (11) um eine Drehachse (9) des Drehgelenks (8) verschwenkbar ist,
**dadurch gekennzeichnet,**
**dass** das Betätigungselement (11) an einer Seite mit Abstand zur Seitenscheiben-Drehachse (9) mit der Seitenscheibe (5) gekoppelt ist und an seiner gegenüberliegenden Seite mit einem Bauteil der Verstelleinrichtung (4) verbunden ist.

2. Fahrzeugdach nach Anspruch 1,
**dadurch gekennzeichnet,**
**dass** das Drehgelenk (8) der Seitenscheibe (5) an einem Hauptlenker (7) der Verstelleinrichtung (4) verschwenkbar gelagert ist.

3. Fahrzeugdach nach Anspruch 1 oder 2,
**dadurch gekennzeichnet,**
**dass** das Drehgelenk (8) mit einem Kulissenzylinder ein einteiliges Bauteil bildet, dessen Mantelfläche eine Kulissenbahn (15) aufweist, in die das Betätigungselement (11) formschlüssig, jedoch gleitend eingreift.

4. Fahrzeugdach nach Anspruch 3,
**dadurch gekennzeichnet,**
**dass** die Kulissenbahn (15) spiralförmig gewunden ist.

5. Fahrzeugdach nach Anspruch 3 oder 4,
**dadurch gekennzeichnet,**
**dass** das Betätigungselement (11) als Mitnehmer (16) ausgeführt ist, der über eine Verbindungsstange (12) relativ zur Seitenscheibe (5) bewegbar ist.

6. Fahrzeugdach nach Anspruch 5,
**dadurch gekennzeichnet,**
**dass** die Verbindungsstange (12) mit einem karosseriefesten Hauptlager (6) der Verstelleinrichtung (4) verbunden ist.

7. Fahrzeugdach nach einem der Ansprüche 1 bis 6,
**dadurch gekennzeichnet,**
**dass** das Betätigungselement (11) in Bezug auf die Seitenscheibe (5) ausschließlich translatorisch bewegbar ist.

8. Fahrzeugdach nach einem der Ansprüche 1 bis 7,
**dadurch gekennzeichnet,**
**dass** das Betätigungselement (11) ein Antriebslenker (19) ist, der an einer Seite gelenkig an die Seitenscheibe (5) gekoppelt ist und an der anderen Seite drehbar in einem Lager der Verstelleinrichtung (4) gehalten ist.

9. Fahrzeugdach nach Anspruch 8,
**dadurch gekennzeichnet,**
**dass** die Drehachse (21) des Antriebslenkers (19) an der Verstelleinrichtung (4) nichtparallel zur Drehachse (9) des Drehgelenks (8) der Seitenscheibe (5) verläuft.

10. Fahrzeugdach nach Anspruch 8 oder 9,
**dadurch gekennzeichnet,**
**dass** die Drehachse (21) des Antriebslenkers (19) an der Verstelleinrichtung (4) nichtparallel zur Drehachse (17) des das Drehgelenk (8) der Seitenscheibe (5) aufnehmenden, schwenkbar gehaltenen Hauptlenkers (7) der Verstelleinrichtung (4) verläuft.

11. Fahrzeugdach nach einem der Ansprüche 8 bis 10,
**dadurch gekennzeichnet,**
**dass** der Antriebslenker (19) über ein Kugelgelenk (20) mit der Seitenscheibe (5) verbunden ist.

## Claims

1. Vehicle roof which can be adjusted between a closed position and an opening position, having an adjusting device (4) which acts on the vehicle roof (1) and having at least one side window (5) which is connected pivotably to the vehicle roof (1) via a rotational joint (8) and during the transfer between the closed and opening position can be pivoted about a rotational axis (9) of the rotational joint (8) by means of an actuating element (11), **characterized in that** the actuating element (11) is coupled on one side to the side window (5) at a distance from the side-window rotational axis (9) and is connected on its opposite side to a component of the adjusting device (4).

2. Vehicle roof according to Claim 1, **characterized in that** the rotational joint (8) of the side window (5) is mounted pivotably on a main link (7) of the adjusting device (4).

3. Vehicle roof according to Claim 1 or 2, **characterized in that** the rotational joint (8) forms, together with a connecting-link cylinder, an integral component whose circumferential surface has a connecting-link path (15) in which the actuating element (11) engages in a positive-locking, but sliding manner.

4. Vehicle roof according to Claim 3, **characterized in that** the connecting-link path (15) is wound spirally.

5. Vehicle roof according to Claim 3 or 4, **characterized in that** the actuating element (11) is designed as a driver (16) which can be moved relative to the side window (5) via a connecting rod (12).

6. Vehicle roof according to Claim 5, **characterized in that** the connecting rod (12) is connected to a main bearing (6) of the adjusting device (4), which main bearing is fixed on the bodywork.

7. Vehicle roof according to one of Claims 1 to 6, **characterized in that** the actuating element (11) can only be moved in a translational manner with regard to the side window (5).

8. Vehicle roof according to one of Claims 1 to 7, **characterized in that** the actuating element (11) is a driving link (19) which is coupled on one side in an articulated manner to the side window (5) and on the other side is held rotatably in a bearing of the adjusting device (4).

9. Vehicle roof according to Claim 8, **characterized in that** the rotational axis (21) of the driving link (19) on the adjusting device (4) runs in a non-parallel manner with respect to the rotational axis (9) of the rotational joint (8) of the side window (5).

10. Vehicle roof according to Claim 8 or 9, **characterized in that** the rotational axis (21) of the driving link (19) on the adjusting device (4) runs in a non-parallel manner with respect to the rotational axis (17) of that main link (7) of the adjusting device (4) which accommodates the rotational joint (8) of the side window (5) and is held pivotably.

11. Vehicle roof according to one of Claims 8 to 10, **characterized in that** the driving link (19) is connected to the side window (5) via a ball and socket joint (20).

## Revendications

1. Toit de véhicule ajustable entre une position de fermeture et une position d'ouverture, avec un dispositif d'ajustage (4) sollicitant le toit de véhicule (1) et avec au moins une vitre latérale (5), qui est liée de manière pivotable au toit de véhicule (1) par l'intermédiaire d'une articulation pivotante (8) et qui est pivotable autour d'un axe de rotation (9) de l'articulation pivotante (8) au moyen d'un élément d'actionnement (11) pendant le transfert entre une position de fermeture et une position d'ouverture,
**caractérisé en ce que**
l'élément d'actionnement (11) est couplé à la vitre latérale (5) sur un côté à distance de l'axe de rotation (9) de la vitre latérale et est lié à un composant du dispositif d'ajustage (4) sur son côté opposé.

2. Toit de véhicule selon la revendication 1,
**caractérisé en ce que**
l'articulation pivotante (8) de la vitre latérale (5) est montée de façon pivotable sur un bras oscillant principal (7) du dispositif d'ajustage (4).

3. Toit de véhicule selon la revendication 1 ou 2,
**caractérisé en ce que**
l'articulation pivotante (8) forme avec un cylindre coulissant, un composant d'un seul tenant, dont l'aire latérale présente une coulisse (15), dans laquelle s'engage mécaniquement mais en coulissant, l'élément d'actionnement (11).

4. Toit de véhicule selon la revendication 3,
**caractérisé en ce que**
la coulisse (15) est enroulée en forme de spirale.

5. Toit de véhicule selon la revendication 3 ou 4,
**caractérisé en ce que**
l'élément d'actionnement (11) est réalisé sous la forme d'un tenon d'entraînement (16) qui est déplaçable par rapport à la vitre latérale (5) par l'intermédiaire d'une tige de liaison (12).

6. Toit de véhicule selon la revendication 5,
**caractérisé en ce que**
la tige de liaison (12) est liée à un palier principal fixé à la carrosserie (6) du dispositif d'ajustage (4).

7. Toit de véhicule selon l'une quelconque des revendications 1 à 6,
**caractérisé en ce que**
l'élément d'actionnement (11) est déplaçable exclusivement en translation par rapport à la vitre latérale (5).

8. Toit de véhicule selon l'une quelconque des revendications 1 à 7,
**caractérisé en ce que**
l'élément d'actionnement (11) est un bras oscillant d'entraînement (19) qui est couplé d'un côté de façon articulée à la vitre latérale (5), et qui est maintenu de l'autre côté à rotation dans un palier du dispositif d'ajustage (4).

9. Toit de véhicule selon la revendication 8,
**caractérisé en ce que**
l'axe de rotation (21) du bras oscillant d'entraînement (19) sur le dispositif d'ajustage (4) se prolonge de façon non parallèle à l'axe de rotation (9) de l'articulation pivotante (8) de la vitre latérale (5).

10. Toit de véhicule selon la revendication 8 ou 9,
**caractérisé en ce que**
l'axe de rotation (21) du bras oscillant d'entraînement (19) sur le dispositif d'ajustage (4) se prolonge de façon non parallèle à l'axe de rotation (17) du bras oscillant principal (7) du dispositif d'ajustage (4) maintenu de façon pivotable recevant l'articulation pivotante (8) de la vitre latérale (5).

11. Toit de véhicule selon l'une quelconque des revendications 8 à 10,
**caractérisé en ce que**
le bras oscillant d'entraînement (19) est lié à la vitre latérale (5) par une articulation à rotule (20).
